(19) Europäisches Patentamt
European Patent Office
Office européen des brevets

(11) EP 1 146 207 B1

(12) **EUROPÄISCHE PATENTSCHRIFT**

(45) Veröffentlichungstag und Bekanntmachung des Hinweises auf die Patenterteilung:
**30.06.2004 Patentblatt 2004/27**

(51) Int Cl.[7]: **F01N 11/00**, F01N 3/08, F02D 41/02, F02D 41/14

(21) Anmeldenummer: **01108460.5**

(22) Anmeldetag: **04.04.2001**

(54) **Verfahren zur Überprüfung der Funktionstüchtigkeit eines Stickoxid-Speicherkatalysators**

Process for checking the functioning of a nitrogen oxide storage catalyst

Procédé pour le contrôle du fonctionnement d'un catalyseur d'accumulation d'oxydes d'azote

(84) Benannte Vertragsstaaten:
**AT BE CH CY DE DK ES FI FR GB GR IE IT LI LU MC NL PT SE TR**

(30) Priorität: **11.04.2000 DE 10017940**

(43) Veröffentlichungstag der Anmeldung:
**17.10.2001 Patentblatt 2001/42**

(73) Patentinhaber: **Umicore AG & Co. KG**
**63457 Hanau-Wolfgang (DE)**

(72) Erfinder:
- **Göbel, Ulrich, Dr.**
  **65795 Hattersheim (DE)**
- **Ruwisch, Lutz Marc, Dr.**
  **64287 Darmstadt (DE)**
- **Lox, Egbert, Dr.**
  **63403 Hanau (DE)**
- **Kreuzer, Thomas, Dr.**
  **61184 Karben (DE)**

(74) Vertreter: **Stellbrink, Axel et al**
**Vossius & Partner**
**Siebertstrasse 4**
**81675 München (DE)**

(56) Entgegenhaltungen:
**EP-A- 0 936 348** **DE-A- 19 714 715**
**DE-A- 19 816 175**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 146 207 B1

Printed by Jouve, 75001 PARIS (FR)

## Beschreibung

Die vorliegende Erfindung betrifft ein Verfahren zur Überprüfung der Funktionstüchtigkeit eines Stickoxid-Speicherkatalysators, welcher für die Entfernung der im Abgasstrom eines Magermotors enthaltenen Stickoxide eingesetzt wird und wenigstens ein Stickoxid-Speichermaterial, eine katalytisch aktive Komponente und gegebenenfalls ein Sauerstoff-Speichermaterial enthält, wobei der Magermotor mit zyklischem Wechsel des Luft/Kraftstoff-Gemisches von mager nach fett betrieben wird und die im Abgas enthaltenen Stickoxide bei magerem Abgas vom Stickoxid-Speichermaterial gespeichert (Speicherphase) und bei fettem Abgas desorbiert und umgesetzt werden (Regenerationsphase).

Stickoxid-Speicherkatalysatoren wurden speziell für die Abgasreinigung von mager betriebenen Brennkraftmaschinen entwickelt. Zur Klasse der mager betriebenen Brennkraftmaschinen gehören Dieselmotoren und mager betriebene Benzinmotoren. Beide Motortypen werden im folgenden als Magermotoren bezeichnet. Magermotoren, insbesondere Benzinmotoren mit Direkteinspritzung, werden zunehmend im Kraftfahrzeugbau eingesetzt, da sie eine theoretische Kraftstoffersparnis von bis zu 25% gegenüber stöchiometrisch betriebenen Brennkraftmaschinen ermöglichen.

Stickoxid-Speicherkatalysatoren besitzen die Fähigkeit, in einem weiten Temperaturbereich Stickoxide unter oxidierenden Abgasbedingungen, das heißt im Magerbetrieb, zu speichern. Diese Betriebsphase wird daher im folgenden auch als Speicherphase bezeichnet.

Da die Speicherkapazität eines Speicherkatalysators begrenzt ist, muß er von Zeit zu Zeit regeneriert werden. Hierzu wird die Luftzahl des dem Motor zugeführten Luft/Kraftstoff-Gemisches und damit auch die Luftzahl des den Motor verlassenden Abgases für kurze Zeit auf Werte unter 1 abgesenkt. Dies wird auch als Anfettung des Luft/Kraftstoff-Gemisches oder des Abgases bezeichnet. Während dieser kurzen Betriebsphase liegen also im Abgas vor Eintritt in den Speicherkatalysator reduzierende Bedingungen vor.

Unter den reduzierenden Bedingungen während der Anfettungsphase werden die gespeicherten Stickoxide freigesetzt und am Speicherkatalysator unter gleichzeitiger Oxidation von Kohlenmonoxid, Kohlenwasserstoffen und Wasserstoff wie bei konventionellen Dreiweg-Katalysatoren zu Stickstoff reduziert. Diese Betriebsphase des Speicherkatalysators wird im folgenden auch als Regenerationsphase bezeichnet. Bei korrekter Funktion des Gesamtsystems aus Speicherkatalysator, Sauerstoff-Sensoren und Motorelektronik liegen hinter dem Speicherkatalysator während der Regenerationsphase in etwa stöchiometrische Bedingungen vor, das heißt die vor dem Speicherkatalysator während der Regenerationsphase im Überschuß vorliegenden Kohlenwasserstoffe und Kohlenmonoxid werden am Speicherkatalysator durch die freigesetzten Stickoxide oxidiert. Erst nach Abschluss der Regeneration kommt es zu einem plötzlichen Anstieg der reduktiven Komponenten hinter dem Katalysator. Dies wird als Durchbruch der reduktiven Komponenten durch den Speicherkatalysator bezeichnet.

Typischerweise beträgt die Dauer der Speicherphase etwa 30 bis 100 Sekunden. Die Dauer der Regenerationsphase ist wesentlich kürzer und liegt nur im Bereich von wenigen Sekunden (1 bis 20 Sekunden).

Funktionsweise und Zusammensetzung von Stickoxid-Speicherkatalysatoren sind zum Beispiel aus der EP 0 560 991 B1 bekannt. Als Speichermaterial enthalten diese Katalysatoren wenigstens eine Komponente aus der Gruppe der Alkalimetalle (z.B. Kalium, Natrium, Lithium, Cäsium), der Erdalkalimetalle (z.B. Barium, Calcium) oder der Seltenerdmetalle (z.B. Lanthan, Yttrium). Als katalytisch aktives Element enthält der Speicherkatalysator Platin. Unter oxidierenden Abgasbedingungen, das heißt im Magerbetrieb, können die Speichermaterialien die im Abgas enthaltenen Stickoxide in Form von Nitraten speichern. Hierzu ist es jedoch erforderlich, dass die Stickoxide, welche je nach Bauart des Motors und seiner Betriebsweise zu etwa 60 bis 95 % aus Stickstoffmonoxid bestehen, zunächst zu Stickstoffdioxid oxidiert werden. Dies geschieht an der Platinkomponente des Speicherkatalysators.

Neben den genannten Komponenten kann der Stickoxid-Speicherkatalysator noch Sauerstoff speichernde Komponenten enthalten. Er kann in diesem Fall neben der Stickoxidspeicherung auch Funktionen eines konventionellen Dreiweg-Katalysators übernehmen. Als Sauerstoff speichernde Komponente wird zum größten Teil Ceroxid eingesetzt. Der Stickoxid-Speicherkatalysator besitzt dann neben seiner Stickoxid-Speicherfunktion auch eine Sauerstoff-Speicherfunktion, er ist somit bifunktional.

Ein wichtiges Problem bei modernen Abgasreinigungsverfahren ist die Überprüfung der korrekten Funktion der verwendeten Katalysatoren, um einen rechtzeitigen Austausch von nicht mehr funktionstüchtigen Katalysatoren zu ermöglichen. Dies gilt auch für Stickoxid-Speicherkatalysatoren, bei denen verschiedene Alterungsmechanismen beobachtet werden. Sie können zum einen durch den im Kraftstoff vorhandenen Schwefel und zum anderen durch thermische Überlastung in ihrer Stickoxid-Speicherfähigkeit geschädigt werden. Während die Vergiftung durch Schwefel in der Regel durch Regeneration bei erhöhten Temperaturen wieder rückgängig gemacht werden kann, handelt es sich bei der thermischen Schädigung um einen irreversiblen Vorgang.

Bei bifunktionalen Speicherkatalysatoren können prinzipiell beide Speicherfunktionen (Stickoxid und Sauerstoff) durch Vergiftung und thermische Einflüsse geschädigt werden. Dabei bedingt die Schädigung der einen Funktion nicht notwendigerweise die Schädigung der anderen Funktion. Da Stickoxide und Sauerstoff beides oxidierende Komponenten sind, lassen sich ihre Wirkungen nicht klar voneinander trennen, so dass es zu Fehldiagnosen bei der Prüfung des Katalysators kommen kann.

Aus der DE 198 16 175 A1 ist ein Verfahren zur Überprüfung der Funktionstüchtigkeit eines Stickoxid-Speicherkatalysators bekannt, welches es gestattet, die Sauerstoff-Speicherfunktion und die Stickoxid-Speicherfunktion des Katalysators getrennt zu beurteilen. Zur Überprüfung der Funktionstüchtigkeit des Speicherkatalysators wird gemäß dieser Offenlegungsschrift die Luftzahl des Abgases von mager nach fett umgeschaltet und der zwischen dem ersten Umschalten bis zum Durchbruch des fetten Abgases durch den Katalysator sich ergebende Zeitversatz $\Delta t_1$ sowie der nach erneutem Umschalten des Abgases von fett nach mager sich ergebende Zeitversatz $\Delta t_2$ zwischen dem zweiten Umschalten und dem Durchbruch des Sauerstoffs durch den Katalysator gemessen. Die Zeitdifferenzen $\Delta t_1$ und $\Delta t_2$ erlauben die getrennte Beurteilung der Sauerstoff-Speicherfunktion und der Stickoxid-Speicherfunktion des Katalysators.

Die Stickoxid-Speicherfunktion des Katalysators hängt vom Stickoxid-Speichermaterial und von der katalytisch aktiven Komponente ab, in der Regel Platin. Sowohl das Stickoxid-Speichermaterial als auch die katalytisch aktive Komponente können geschädigt werden.

Das Stickoxid-Speichermaterial speichert das im Abgas enthaltene Schwefeldioxid in Form von Sulfaten. Dies geht zu Lasten der Stickoxid-Speicherfähigkeit. Die Sulfate des Speichermaterials sind wesentlich stabiler als die Nitrate. Sie können jedoch bei Abgastemperaturen oberhalb von 600° C und unter reduzierenden Bedingungen wieder zersetzt werden. Durch diese Desulfatisierung erhält das Stickoxid-Speichermaterial weitgehend seine ursprüngliche Stickoxid-Speicherfähigkeit zurück.

Die Stickoxid-Speicherfähigkeit des Speichermaterials hängt entscheidend von seiner spezifischen Oberfläche ab, mit der es mit dem Abgas in Wechselwirkung treten kann. Wird das Speichermaterial Abgastemperaturen oberhalb etwa 800° C ausgesetzt, so verringert sich seine spezifische Oberfläche irreversibel und seine Stickoxid-Speicherfähigkeit nimmt ab.

Zur optimalen Nutzung der katalytisch aktiven Komponente ist sie auf den oxidischen Materialien des Speicherkatalysators in hochdisperser Form mit mittleren Partikelgrößen zwischen etwa 2 und 15 nm aufgebracht. Aufgrund der feinen Verteilung besitzen die Platinpartikel eine hohe Oberfläche für die Wechselwirkung mit den Bestandteilen des Abgases. Besonders im mageren Abgas von Magermotoren wird mit steigender Abgastemperatur eine irreversible Vergrößerung zum Beispiel der Platinkristallite beobachtet, die mit einer irreversiblen Verminderung der katalytischen Aktivität einhergeht.

Mit dem Verfahren gemäß der DE 198 16 175 A1 wird eine mögliche Schädigung des Stickoxid-Speichermaterials als auch der katalytisch aktiven Komponente gleichzeitig erfasst. Eine separate Beurteilung der Schädigung des Speichermaterials von einer Schädigung der katalytisch aktiven Komponente ist mit diesem Verfahren nicht möglich. Eine getrennte Beurteilung der katalytisch aktiven Komponente ist jedoch wünschenswert, da ein Speicherkatalysator, dessen katalytische aktive Komponente bezüglich der Oxidation von Stickstoffmonoxid thermisch geschädigt ist, immer noch eine ausreichende Aktivität für die Abgasreinigung unter stöchiometrischen Abgasbedingungen aufweist.

Es ist daher Aufgabe der vorliegenden Erfindung, ein Verfahren anzugeben, welches neben der Beurteilung der Speichermaterialien des Speicherkatalysators auch in der Lage ist, eine mögliche Schädigung der katalytisch aktiven Komponente des Speicherkatalysators zu erkennen.

Diese Aufgabe wird gelöst durch ein Verfahren zur Überprüfung der Funktionstüchtigkeit eines Stickoxid-Speicherkatalysators, welcher für die Entfernung der im Abgasstrom eines Magermotors enthaltenen Stickoxide eingesetzt wird und wenigstens ein Stickoxid-Speichermaterial, eine katalytisch aktive Komponente und gegebenenfalls ein Sauerstoff-Speichermaterial enthält, wobei der Magermotor mit zyklischem Wechsel des Luft/Kraftstoff-Gemisches von mager nach fett betrieben wird und die im Abgas enthaltenen Stickoxide bei magerem Abgas vom Stickoxid-Speichermaterial gespeichert (Speicherphase) und bei fettem Abgas desorbiert und umgesetzt werden (Regenerationsphase). Das Verfahren ist dadurch gekennzeichnet, dass zur Ermittlung einer möglichen Schädigung der katalytisch aktiven Komponente die Stickoxid-Speicherfähigkeit des Stickoxid-Speicherkatalysators bei Abgastemperaturen bestimmt wird, die in einem Bereich liegen, in dem die Oxidation von Stickstoffmonoxid zu Stickstoffdioxid kinetisch kontrolliert ist, während im thermodynamisch kontrollierten Bereich keine Änderung der Stickoxid-Speicherfähigkeit festzustellen ist, und dass zur Ermittlung einer möglichen Schädigung der Speichermaterialien die Stickoxid-Speicherfähigkeit des Stickoxid-Speicherkatalysators bei Abgastemperaturen bestimmt wird, die in einem Bereich liegen, in dem die Oxidation von Stickstoffmonoxid zu Stickstoffdioxid thermodynamisch kontrolliert ist.

Wenn im Rahmen dieser Erfindung von den Komponenten des Speicherkatalysators in der Einzahl gesprochen wird, so geschieht das aus Gründen der besseren Verständlichkeit. Für den Fachmann versteht es sich von selbst, dass zur Optimierung der Eigenschaften des Speicherkatalysators verschiedene Stickoxid-Speichermaterialien als auch Sauerstoff-Speichermaterialien und mehrere katalytisch aktive Komponenten (zum Beispiel Platin, Palladium, Rhodium, Iridium) miteinander kombiniert werden können.

Das erfindungsgemäße Verfahren beruht auf den im folgenden darzulegenden Überlegungen zur Wirkungsweise von Stickoxid-Speicherkatalysatoren.

Nach den anerkannten Theorien von Stickoxid-Speicherkatalysatoren werden die Stickoxide des Abgases in Form von Nitraten des Speichermaterials auf dem Katalysator gebunden. Allerdings reagiert nur Stickstoffdioxid mit dem Speichermaterial zu den entsprechenden Nitraten. Da etwa 60 bis 95 Vol.-% der Stickoxide im Abgas von Verbrennungsmotoren aus Stickstoffmonoxid bestehen, muss dieses erst an den katalytisch aktiven Komponenten des Speicherkatalysators zu Stickstoffdioxid oxidiert werden, bevor es mit dem Speichermaterial zu Nitraten reagieren kann.

Die Stickoxid-Speicherfähigkeit eines Speicherkatalysators wird also durch zwei Prozesse bestimmt:

a) Oxidation von Stickstoffmonoxid an den katalytisch aktiven Komponenten des Speicherkatalysators zu Stickstoffdioxid gemäß der folgenden Gleichgewichts-Reaktionsgleichung:

$$2NO + O_2 \rightleftharpoons 2NO_2 \qquad (1)$$

b) Reaktion von Stickstoffdioxid mit dem Speichermaterial zu den entsprechenden Nitraten.

Bei der Oxidation von Stickstoffmonoxid in einer Sauerstoff enthaltenden Atmosphäre an den katalytisch aktiven Komponenten gemäß der Reaktionsgleichung (1) stellt sich in Abhängigkeit von der Temperatur jeweils ein bestimmtes Gleichgewicht zwischen Stickstoffmonoxid und Sauerstoff auf der einen Seite und Stickstoffdioxid auf der anderen Seite ein. Oberhalb einer Temperatur von etwa 300° C entspricht das sich einstellende Gleichgewicht dem thermodynamischen Gleichgewicht, das heißt das Gleichgewicht verschiebt sich wegen der stark exothermen Natur der Bildung von Stickstoffdioxid aus Stickstoffmonoxid und Sauerstoff mit zunehmender Temperatur nach links. Oberhalb von etwa 650° C reagiert Stickstoffmonoxid nur noch in sehr geringem Umfang mit Sauerstoff zu Stickstoffdioxid. Unterhalb von 300° C verschiebt sich das thermodynamische Gleichgewicht gemäß Reaktionsgleichung (1) mit abnehmender Temperatur nach rechts, das heißt die Bildung von Stickstoffdioxid ist in diesem Temperaturbereich thermodynamisch begünstigt. Trotzdem nimmt unterhalb von etwa 300° C die Bildung von Stickstoffdioxid aufgrund kinetischer Beschränkungen wieder ab und ist unterhalb von 100° C vernachlässigbar. Die hier genannte Temperaturgrenze von etwa 300° C gilt für einen Sauerstoffgehalt der Gasmischung von 6 Vol.-%.

In der praktischen Durchführung des Verfahrens wird die Messung im kinetisch kontrollierten Bereich unterhalb von 300° C und im thermodynamisch kontrollierten Bereich bevorzugt zwischen 350 und 450° C vorgenommen.

Die Stickoxid-Speicherfähigkeit des Katalysators ist im kinetisch kontrollierten Temperaturbereich stark von der zur Verfügung stehenden Oberfläche der Platinpartikel abhängig. Je größer die Platinoberfläche ist, um so weniger wirken sich kinetische Beschränkungen auf die Bildung des thermodynamisch begünstigten Stickstoffdioxids aus. Dagegen spielt die Platinoberfläche im thermodynamisch kontrollierten Bereich bei der Bildung von Stickstoffdioxid nur noch eine untergeordnete Rolle. Der entscheidende Faktor für die Stickoxid-Speicherfähigkeit ist in diesem Bereich eine schnelle Entfernung des gebildeten Stickstoffdioxids aus dem Gleichgewicht gemäß Reaktionsgleichung (1) durch Reaktion mit dem Speichermaterial zu Nitraten, was zu einer dem Gleichgewicht entsprechenden Neubildung von Stickstoffdioxid führt. Die Nitratbildung hängt von einer möglichen Schädigung des Speichermaterials durch thermische Einflüsse oder durch Schwefelvergiftung ab.

Durch Überprüfung der Stickoxid-Speicherfähigkeit des Katalysators in den beiden Temperaturbereichen (kinetisch kontrollierter Bereich und thermodynamisch kontrollierter Bereich der Bildung von Stickstoffdioxid) ist es daher möglich eine Schädigung der katalytisch aktiven Komponenten von einer Schädigung des Speichermaterials zu unterscheiden.

Zur Überprüfung der Stickoxid-Speicherfähigkeit können verschiedenartige Sensoren eingesetzt werden. Es können sowohl Stickoxid-Sonden wie auch Lambda-Linearsonden, Lambda-Sprungsonden, Kohlenwasserstoff-Sonden, Kohlenmonoxid-Sonden oder Wasserstoff-Sonden eingesetzt werden. Weiterhin ist es möglich, die Stickoxid-Speicherfähigkeit an Hand der Änderung einer von der Menge der gespeicherten Stickoxide abhängigen physikalischen Eigenschaft des Speicherkatalysators zu bestimmen. Besonders geeignet hierfür ist die komplexe Impedanz des Katalysators. Ein Verfahren zur Bestimmung der Stickoxid-Speicherfähigkeit eines Speicherkatalysators an Hand seiner komplexen Impedanz wird zum Beispiel in der EP 0 936 348 A2 beschrieben.

Eine Stickoxid-Sonde ist in der Lage, die Stickoxid-Konzentration im Abgas direkt zu messen. Die verfügbaren Stickoxid-Sonden erzeugen aufgrund ihres Aufbaus gleichzeitig auch ein lineares und ein sprungartiges Signal für den Sauerstoffgehalt des Abgases (Lambdasignal).

Eine Lambda-Linearsonde liefert ein Sonden-Signal, das linear mit dem Sauerstoffgehalt des Abgases ansteigt. Eine Lambda-Sprungsonde liefert dagegen eine Sondenspannung, die nur zwei Zustände kennt. Bei Über- oder Unterschreiten eines Schwellwertes der Sauerstoffkonzentration im Abgas springt die Sondenspannung von einem

Zustand in den anderen. Unter mageren Bedingungen ist die Sondenspannung praktisch gleich Null. Unter fetten Bedingungen zeigt die Sonde eine Ausgangsspannung die typischerweise zwischen 700 und 900 mV liegt. Die Sondenspannung besitzt einen steilen Gradienten im Übergangsbreich um Lambda = 1. Mit Hilfe dieses Sondentyps ist eine gute Erkennung von Durchbrüchen des fetten Abgases am Ende einer Regenerationsphase möglich. Die Funktionsweise der für das Verfahren geeigneten Lambda-Sonden werden im Kraftfahrttechnischen Taschenbuch von Bosch, VDI-Verlag, 20. Auflage von 1995, Seiten 490 bis 492, beschrieben.

Zur Bestimmung der Stickoxid-Speicherfähigkeit können auch Kohlenwasserstoff-, Kohlenmonoxid- und Wasserstoff-Sonden eingesetzt werden. Diese Sondentypen befinden sich derzeit in der Entwicklung und sind noch nicht serienreif. Auch mit diesen Sonden kann der Durchbruch des fetten Abgases durch den Katalysator am Ende der Regenerationsphase bestimmt werden.

Bei Verwendung einer Stickoxid-Sonde ist es möglich, die Stickoxid-Speicherfähigkeit des Speicherkatalysators direkt zu bestimmen. Hierzu wird die Stickoxid-Sonde hinter dem Speicherkatalysator im Abgasstrom angeordnet. Übersteigt die Stickoxid-Konzentration während der Speicherphase einen vorgegebenen Schwellwert, so wird von der Motorsteuerung die Regeneration eingeleitet. Aus den in der Motorsteuerung abgelegten Kennfeldern ist es möglich, die bis zu diesem Zeitpunkt emittierte Menge der Stickoxide durch Integration über die durchlaufenen Betriebszustände des Motors zu berechnen und mit der Speicherkapazität des Katalysators im frischen Zustand zu vergleichen. Liegt die bis zum Erreichen des Schwellwertes aufsummierte Menge der Stickoxide wesentlich unter der Speicherkapazität des frischen Katalysators, so liegt eine Schädigung der Speicherfähigkeit vor. Die Zeitdauer vom Beginn einer Speicherphase bis zum Erreichen des Schwellenwertes für die Regeneration wird im folgenden mit $\Delta t_s$ bezeichnet.

Durch Wahl des Temperaturbereiches, in dem die Messung vorgenommen wird, kann unterschieden werden, welcher Art diese Schädigung ist. Eine Schädigung der katalytisch aktiven Komponente liegt vor, wenn im kinetisch kontrollierten Bereich bei Temperaturen des Abgases unterhalb von 300° C eine Verminderung der Stickoxid-Speicherfähigkeit festgestellt wird, während im thermodynamisch kontrollierten Bereich oberhalb von 300°C, bevorzugt im Temperaturbereich von 350 - 450° C, keine Änderung der Stickoxid-Speicherfähigkeit feststellbar ist.

Die Ermittlung einer möglichen Schädigung der Speichermaterialien wird bei Temperaturen des Abgases oberhalb von 300° C, bevorzugt im Temperaturbereich von 350 - 450° C, vorgenommen. Wird hierbei eine Schädigung festgestellt, so kann diese auf einer Verschwefelung beruhen oder in einer thermischen Schädigung des Speichermaterials bestehen. Im ersten Fall handelt es sich um eine reversible Schädigung, die durch Entschwefelung des Speichermaterials wieder rückgängig gemacht werden kann, im zweiten Fall handelt es sich um eine permanente Schädigung. Zur Unterscheidung dieser beiden Schädigungsmechanismen wird daher nach Erkennen einer Schädigung des Speichermaterials eine Desulfatierung des Stickoxid-Speicherkatalysators eingeleitet.

Mit Lambda-Sonden, Kohlenwasserstoff-, Kohlenmonoxid- und Wasserstoff-Sonden kann die Stickoxid-Speicherfähigkeit nur indirekt während der Regenerationsphase bestimmt werden. Diese Sonden werden dazu benutzt, um den Zeitversatz $\Delta t_1$ zwischen dem Umschalten des Luft/Kraftstoff-Gemisches von mager nach fett und dem Durchbruch des fetten Abgases durch den Stickoxid-Speicherkatalysator zu messen. Diese Zeitdifferenz wird durch die Wirkung des Stickoxid-Speichermaterials und durch das gegebenenfalls vorliegende Sauerstoff-Speichermaterial des Katalysators verursacht. Die Zeitdifferenz wird um so kleiner, je geringer die Speicherfähigkeit des Katalysators für Stickoxide und gegebenenfalls Sauerstoff ist.

Sollen die Stickoxid-Speicherfähigkeit und die Sauerstoff-Speicherfähigkeit des Katalysators getrennt voneinander beurteilt werden, so muss nach erneutem Umschalten des Luft/Kraftstoff-Gemisches von fett nach mager der sich ergebende Zeitversatz $\Delta t_2$ zwischen dem zweiten Umschalten und dem Durchbruch des Sauerstoffs durch den Katalysator gemessen werden. Dieser Zeitversatz ist nur noch abhängig von der Sauerstoff-Speicherfähigkeit des Katalysators.

Nach dem Umschalten der Luftzahl von mager nach fett werden die Stickoxide durch die reduktiven Komponenten des Abgases (Kohlenwasserstoffe, Kohlenmonoxid und Wasserstoff) desorbiert und am Speicherkatalysator umgesetzt. Außerdem werden die reduktiven Komponenten des Abgases unter Verbrauch des gespeicherten Sauerstoffs oxidiert. Stickoxid-Speichermaterial und Sauerstoff-Speichermaterial werden somit im fetten Abgas entleert.

Die Luftzahl des Abgases hinter dem Katalysator folgt der Luftzahländerung vor dem Katalysator nicht spontan, sondern nur mit einer gewissen Verzögerung und bleibt, solange die Speichermaterialien nicht entleert sind, noch im mageren Bereich, so dass eine hinter dem Katalysator angeordnete Sonde noch eine magere Abgaszusammensetzung melden würde. Erst wenn Stickoxid-Speichermaterial und Sauerstoff-Speichermaterial entleert sind, werden keine Kohlenwasserstoffe, Kohlenmonoxid und Wasserstoff mehr umgesetzt. Es kommt dann zum Durchbruch dieser Stoffe durch den Katalysator und die Luftzahl des Abgases hinter dem Katalysator wechselt in den fetten Bereich. Dieser Zeitpunkt kann in einfacher Weise mit den genannten Sonden bestimmt werden.

Die gespeicherten Stickoxide werden in der Regel schneller freigesetzt als der auf dem Katalysator gespeicherte Sauerstoff durch die Kohlenwasserstoffe im fetten Abgas verbraucht, beziehungsweise entleert, wird. Außerdem sind diese Desorptionsgeschwindigkeiten noch von dem Grad der Anfettung des Abgases sowie der Abgastemperatur abhängig. Je stärker das Abgas angefettet wird, um so schneller werden Stickoxid-Speichermaterial und Sauerstoff-Speichermaterial entleert. Gleiches gilt für eine Erhöhung der Abgastemperatur. Für das erfindungsgemäße Verfahren kann die Luftzahl während der Fettphase in einem Intervall zwischen 0,7 und 0,99 festgelegt werden.

Wird eine Luftzahl knapp unter 1 gewählt, so geht die Entleerung der Speicher langsamer vor sich als bei einem niedrigeren Wert der Luftzahl. Dies ermöglicht eine höhere Genauigkeit der Zeitmessung. Der Durchbruch der reduktiven Komponenten durch den Katalysator tritt in diesem Fall erst nach vollständiger Entleerung von Stickoxid-Speichermaterial und Sauerstoff-Speichermaterial ein, so dass die zu messende Zeitdifferenz $\Delta t_1$ die Summe beider Speicherkapazitäten wiedergibt.

Bevorzugt wird die Prüfung des Katalysators bei einem bestimmten Betriebszustand des Motors, das heißt bei definierter Abgastemperatur und Luftzahl während der Fettphase, beziehungsweise Regenerationsphase, vorgenommen.

Der Entleerung des Stickoxid- und Sauerstoffspeichers beim Umschalten der Luftzahl von mager nach fett steht eine entsprechende Auffüllung des Sauerstoffspeichers nach Beendigung der Fettphase gegenüber. Wie schon beim Umschalten von mager nach fett so folgt auch nach Umschalten von fett nach mager die Luftzahl hinter dem Katalysator nicht spontan der Luftzahl vor dem Katalysator. Die Luftzahl bleibt zunächst im fetten Bereich, da der Sauerstoffüberschuß des mageren Abgases jetzt erst zur Auffüllung des Sauerstoffspeichers verwendet wird. Eine hinter dem Katalysator angeordnete Sprung-Lambda-Sonde würde also weiterhin ein fettes Abgas anzeigen. Erst nach Auffüllung des Sauerstoffspeichers kommt es zu einem merklichen Durchbruch des Sauerstoffs durch den Katalysator und damit im Falle einer Messung mit einer Sprungsonde zu einem Sprung des Sondensignals. Die meßbare Zeitdifferenz $\Delta t_2$ zwischen dem Beendigen der Fettphase und dem Durchbruch des Sauerstoffs durch den Katalysator ist ein Maß für die Speicherkapazität des Sauerstoffspeichers. Sinkt die Sauerstoff-Speicherkapazität des Katalysators durch Vergiftung mit Schwefel oder durch thermische Schädigung, so macht sich dies durch eine Verringerung von $\Delta t_2$ bemerkbar und es kann gegebenenfalls ein Signal zum Austausch des Katalysators gesetzt werden.

Zur getrennten Beurteilung der Stickoxid-Speicherfähigkeit und der Sauerstoff-Speicherfähigkeit können für $\Delta t_1$ und $\Delta t_2$ folgende Beziehungen aufgestellt werden:

$$\Delta t_1 = a \cdot K_{NOx} + b \cdot K_{O2} \qquad (2)$$

Hierin bezeichnen a und b Proportionalitätskonstanten. $K_{NOx}$ beziehungsweise $K_{O2}$ bezeichnen die Speicherkapazitäten des Katalysators für Stickoxide und Sauerstoff. Beziehung (2) spiegelt die Feststellung wieder, dass $\Delta t_1$ durch beide Speicherkapazitäten bedingt wird. Es ist klar ersichtlich, das die Wirkung der beiden Speicherkapazitäten nicht durch Messung von $\Delta t_1$ allein voneinander getrennt werden können. Deshalb wird als weitere Messung die Bestimmung von $\Delta t_2$ herangezogen. $\Delta t_2$ ist nur abhängig von der Sauerstoffspeicherkapazität:

$$\Delta t_2 = c \cdot K_{O2} \qquad (3)$$

Die Proportionalitätskonstante b beschreibt die Entleerungsgeschwindigkeit des Sauerstoffspeichers, während die Konstante c ein Maß für die Geschwindigkeit ist, mit der der Sauerstoffspeicher wieder aufgefüllt wird. Aus den Beziehungen (2) und (3) ergibt sich für die Kapazität des Stickoxidspeichers:

$$a \cdot K_{NOx} = \Delta t_1 + \frac{b}{c} \cdot \Delta t_2 \qquad (4)$$

Das Verhältnis b/c in Gleichung (4) ist vom Material und den gewählten Betriebsbedingungen des Motors während der Katalysatorprüfung abhängig. Es kann in Vorversuchen ermittelt werden. Gleichungen (2) und (3) ermöglichen also auch bei gleichzeitiger Anwesenheit einer Stickoxid-Speicherfunktion und einer Sauerstoff-Speicherfunktion im Speicherkatalysator die getrennte Beurteilung beider Funktionen durch Messung von $\Delta t_1$ und $\Delta t_2$.

Die Zeitdifferenzen $\Delta t_1$ und $\Delta t_2$ können auf verschiedenartige Weise bestimmt werden. So besteht die Möglichkeit, die Zeitdifferenzen $\Delta t_1$ und $\Delta t_2$ aus der Differenz des jeweiligen Zeitpunktes der Umschaltung der Luftzahl durch die Motorsteuerung und dem jeweiligen Zeitpunkt der Änderung der Luftzahl hinter dem Katalysator zu ermitteln. Bei langen Abgasleitungen zwischen Motor und Speicherkatalysator müssen die so bestimmten Zeitdifferenzen gegebenenfalls um die Laufzeiten des Abgases zwischen Motor und Katalysator korrigiert werden. Alternativ hierzu können zur Bestimmung der Zeitdifferenzen die Änderungen der Luftzahl vor und hinter dem Katalysator mit je einer Sonde ermittelt werden.

Tabelle 1 gibt einen Überblick über die mit dem erfindungsgemäßen Verfahren sich ergebenden Beurteilungsmöglichkeiten des Stickoxid-Speicherkatalysators bei Verwendung unterschiedlicher Sonden. Bezüglich der Sonden

können zwei Gruppen unterschieden werden.

Mit einer Stickoxid-Sonde oder einer Eigenschafts-Sonde für eine physikalische Eigenschaft des Speicherkatalysators kann die Zeitdauer der Speicherphase $\Delta t_s$ gemessen werden. Die Messung kann sowohl im kinetisch (kin) als auch im thermodynamisch (therm) kontrollierten Temperaturbereich vorgenommen werden. Wird eine Verringerung von $\Delta t_s$ im kinetisch kontrollierten Bereich festgestellt (⬇), so kann dies durch die in der linken Spalte der Tabelle aufgeführten Schädigungsmechanismen hervorgerufen worden sein. Die Detektion einer irreversiblen Schädigung des Sauerstoff-Speichermaterials ist hiermit nicht möglich (keine feststellbare Änderung gegenüber dem vorhergehenden Zustand des Katalysators, O). Ergibt eine Kontrollmessung im thennodynamisch kontrollierten Bereich keine Änderung von $\Delta t_s$ gegenüber der vorhergehenden Messung in diesem Bereich, so liegt eine thermische Schädigung der katalytisch aktiven Komponente vor. Eine weitergehende Unterscheidung der Schädigungsmechanismen ist möglich, wenn nach Feststellung einer Schädigung eine Desulfatisierung des Speicherkatalysators vorgenommen wird. Hierzu wird die Abgastemperatur bei fettem Abgas über 650° C erhöht. Die nach Desulfatisierung zu messende Zeitdauer der Speicherphase ist in Tabelle 1 mit $\Delta t_{s,DeSOx}$ bezeichnet. Ändert sich diese Zeit nicht gegenüber $\Delta t_s$, so liegt eine irreversible Schädigung des Stickoxid-Speichermaterials und des gegebenenfalls anwesenden Sauerstoff-Speichermaterials vor. Ist dagegen $\Delta t_{s,DeSOx}$ größer als $\Delta t_s$, das heißt die Schädigung konnte durch die Desulfatisierung rückgängig gemacht werden, so lag nur einer reversible Vergiftung des Stickoxid-Speichermaterials und gegebenenfalls des Sauerstoff-Speichermaterials vor.

Mit einer Sauerstoff-, Wasserstoff-, Kohlenwasserstoff- oder einer Kohlenmonoxid-Sonde lassen sich die schon definierten Zeitdifferenzen $\Delta t_1$ und $\Delta t_2$ messen. Mit $\Delta t_{1,DeSOx}$, und $\Delta t_{2,DeSOx}$ werden in Tabelle 1 die Zeitdifferenzen $\Delta t_1$ und $\Delta t_2$ nach erfolgter Desulfatisierung bezeichnet. Entsprechend den obigen Erläuterungen zu den Messungen mit Stickoxid- oder Eigenschafts-Sonde ergeben sich die in Tabelle 1 aufgeführten Unterscheidungsmöglichkeiten für die verschiedenen Schädigungsmechanismen des Speicherkatalysators.

**Tabelle 1:**

| Diagnose mittels Sondentyp | Stickoxid-Sonde Eigenschafts-Sonde | | | | Sauerstoff-Sonde (Lambdasonde) Wasserstoff-, Kohlenwasserstoff-, Kohlenmonoxid-Sonde | | | | | | | |
|---|---|---|---|---|---|---|---|---|---|---|---|---|
| | $\Delta t_s$ | | $\Delta t_{sDeSOx}$ | | $\Delta t_1$ | | $\Delta t_2$ | | $\Delta t_{1,DeSOx}$ | | $\Delta t_{2,DeSOx}$ | |
| | kin | therm | kin | therm | kin | therm | kin | therm | kin | therm | kin | therm |
| Thermische Schädigung der katalytisch aktiven Komponente | ↓ | ○ | ○ | ○ | ↓ | ○ | ○ | ○ | ○ | ○ | ○ | ○ |
| Irreversible Schädigung des Stickoxid-Speichermaterials | ↓ | ↓ | ○ | ○ | ↓ | ↓ | ○ | ○ | ○ | ○ | ○ | ○ |
| Irreversible Schädigung des Sauerstoff-Speichermaterials | ○ | ○ | ○ | ○ | ↓ | ↓ | ↓ | ↓ | ○ | ○ | ○ | ○ |
| Irreversible Schädigung des Stickoxid- und Sauerstoff-Speichermaterials | ↓ | ↓ | ○ | ○ | ↓↓ | ↓↓ | ↓ | ↓ | ○ | ○ | ○ | ○ |
| Reversible Vergiftung des Stickoxid-Speichermaterials | ↓ | ↓ | ↑ | ↑ | ↓ | ↓ | ○ | ○ | ↑ | ↑ | ○ | ○ |
| Reversible Vergiftung des Stickoxid- und Sauerstoff-Speichermaterials | ↓ | ↓ | ↑ | ↑ | ↓↓ | ↓↓ | ↓ | ↓ | ↑↑ | ↑↑ | ↑ | ↑ |

$\Delta t_s$ Dauer der Magerphase
$\Delta t_{s,DeSOx}$ = Dauer der Magerphase nach Desulfatierung
$\Delta t_1$ = Zeitdifferenz zwischen der Einleitung der Fettphase und dem Durchbruch eines fetten Abgases
$\Delta t_2$ = Zeitdifferenz zwischen dem Einleiten der Magerphase und dem Durchbruch eines sauerstoffreichen Abgases
$\Delta t_{1,DeSOx}$ = Zeitdifferenz zwischen der Einleitung der Fettphase und dem Durchbruch eines fetten Abgases nach Desulfatierung
$\Delta t_{2,DeSOx}$ = Zeitdifferenz zwischen dem Einleiten der Magerphase und dem Durchbruch eines sauerstoffreichen Abgases nach Desulfatierung
kin = kinetisch kontrollierter Temperaturbereich bezüglich der NO Oxidation
therm = thermodynamisch kontrollierter Temperaturbereich bezüglich der NO Oxidation

↓ = Verringerung der Zeitdifferenz relativ zum vorherigen Zustand
↑ = Erhöhung der Zeitdifferenz relativ zum vorherigen Zustand
○ = keine Veränderung der Zeitdifferenz relativ zum vorherigen Zustand

Die Erfindung wird nun an Hand der Beispiele 1 und 2 und der Figuren 1 und 5 näher erläutert. Es zeigen:

**Figur 1:** Messungen zum Oxidationsgleichgewicht gemäß Reaktionsgleichung (1)

**Figur 2:** Stickoxid-Speicherfähigkeit eines Speicherkatalysators im frischen Zustand und nach unterschiedlichen Schädigungen in Abhängigkeit von der Temperatur

**Figur 3:** Abgasreinigungsanlage mit einer Sonde für eine physikalische Eigenschaft des Speicherkatalysators

**Figur 4:** Abgasreinigungsanlage mit einer Stickoxid-Sonde hinter dem Speicherkatalysator

**Figur 5:** Abgasreinigungsanlage mit einer Lambda-Sprungsonde vor und hinter dem Speicherkatalysator

**Figur 6:** Zeitlicher Verlauf der aufgeprägten Luftzahl λ, vor dem Speicherkatalysator und der Signalverlauf der beiden Lambda-Sprungsonden von Figur 4 während der Überprüfung der Katalysatorfunktion

**Beispiel 1:**

Es wurde die bei Oxidation von Stickstoffmonoxid an einem Oxidationskatalysator sich ergebende Gleichgewichtskonzentration von Stickstoffdioxid in Abhängigkeit von der Gastemperatur gemessen und mit der thermodynamisch berechneten Gleichgewichtskonzentration verglichen.

Für diese Messungen wurde ein reiner Platin/Aluminiumoxid-Oxidationskatalysator angefertigt. Hierzu wurden 15 g Platin auf 700 g Aluminiumoxid mit einer BET-Oberfläche im calcinierten Frischzustand von 210 $m^2/g$ durch Imprägnieren mit einer wäßrigen Lösung von Platintetraamminnitrat sowie anschließendem Trocknen und Calcinieren bei 500° C an Luft abgeschieden.

Das auf diese Weise hergestellte Katalysator-Pulver wurden zu einer wäßrigen Dispersion angerührt und auf eine Partikelgröße von 3-5 µm ($d_{50}$) gemahlen. Mit dieser Dispersion wurde ein handelsüblicher Wabenkörper aus Cordierit durch Eintauchen in die Dispersion beschichtet.

Der beschichtete Wabenkörper wurde bei 120° C im Trockenschrank getrocknet. Tauch- und Trockenschritte wurden so lange wiederholt, bis eine Beladung von 110 g pro Liter Wabenkörpervolumen im trocknen Zustand erreicht war. Anschließend erfolgte eine 4-stündige Calcinierung des beschichteten Wabenkörpers bei 500° C. Der fertige Katalysator enthielt somit 107,7 g/l Aluminiumoxid und 2,3 g/l Platin.

Über den Katalysator wurde ein Gasgemisch aus 500 Vol.-ppm Stickstoffmonoxid, 6 Vol.-% Sauerstoff und Rest Stickstoff bei Temperaturen zwischen 50 und 500° C mit einer Raumgeschwindigkeit von 30000 $h^{-1}$ geleitet. In Figur 1 sind die dabei hinter dem Katalysator gemessenen Gleichgewichtsanteile von Stickstoffdioxid über der Temperatur aufgetragen und mit den thermodynamisch berechneten Werten verglichen.

Oberhalb von etwa 300° C stimmen die gemessenen Gleichgewichtswerte mit den für 6 Vol.-% Sauerstoff berechneten Werten sehr gut überein. Unterhalb von 300° C geht die gemessene Gleichgewichtskonzentration mit fallender Temperatur wegen kinetischer Beschränkungen der Reaktion bis auf Null zurück, während die berechnete Gleichgewichtskonzentration bei tiefen Temperaturen gegen 1 strebt.

**Beispiel 2:**

Es wurde ein Platin und Rhodium als katalytisch aktive Komponenten und Bariumoxid als Speichermaterial enthaltender Stickoxid-Speicherkatalysator gemäß Beispiel 1 der DE 198 38 282 A1 aus drei Pulvermaterialien wie folgt hergestellt:

550 g eines Cer/Zirkon-Mischoxides (90 Gew.-% Ceroxid und 10 Gew.-% Zirkonoxid) mit einer BET-Oberfläche im calcinierten Frischzustand von 87 $m^2/g$ wurden durch Imprägnieren mit wäßriger Bariumacetatlösung, anschließendem Trocknen und Calcinieren bei 500° C an Luft mit 100 g Bariumoxid belegt. Durch das Calcinieren wurde das lösliche Bariumacetat auf dem Trägermaterial in Form von Bariumoxid beziehungsweise Bariumcarbonat fixiert. Hierdurch wurde sichergestellt, daß das Bariumacetat bei den folgenden Herstellschritten nicht wieder in Lösung geht.

Zur Anfertigung eines Platin/Aluminiumoxid-Pulvers wurden 15 g Platin auf 700 g Aluminiumoxid mit einer BET-Oberfläche im calcinierten Frischzustand von 210 $m^2/g$ durch Imprägnieren mit einer wäßrigen Lösung von Platintetraamminnitrat sowie anschließendem Trocknen und Calcinieren bei 500° C an Luft abgeschieden.

Zur Anfertigung eines Rhodium/Aluminiumoxid-Pulvers wurden 1,5 g Rhodium auf 100 g Aluminiumoxid mit einer BET-Oberfläche im calcinierten Frischzustand von 142 $m^2/g$ durch Imprägnieren mit einer wäßrigen Rhodiumnitratlösung sowie anschließendem Trocknen und Calcinieren bei 500° C abgeschieden.

Die drei auf diese Weise hergestellten Pulver wurden zu einer wäßrigen Dispersion angerührt und auf eine

Partikelgröße von 3-5 µm ($d_{50}$) gemahlen. Die oxidischen Feststoffanteile der Dispersion wurden mittels eines Tauchverfahrens auf handelsübliche Wabenkörper aus Cordierit aufgebracht.

Die auf diese Weise beschichteten Wabenkörper wurden bei 120° C im Trockenschrank getrocknet. Tauch- und Trockenschritte wurden so lange wiederholt, bis eine Beladung von 230 g an oxidischen Anteilen pro Liter Wabenkörpervolumen erreicht war. Anschließend erfolgte eine 4-stündige Calcinierung der beschichteten Wabenkörper bei 500° C. Der fertige Katalysator enthielt somit 15,9 g/l Bariumoxid, 87,2 g/l Cer/Zirkon-Mischoxid, 126,9 g/l Aluminiumoxid, 2,4 g/l Platin und 0,24 g/l Rhodium.

Die Stickoxid-Speicherfähigkeit dieser Stickoxid-Speicherkatalysatoren wurde in einer Synthesegas-Anlage im frischen Zustand und nach unterschiedlichen Alterungen in Abhängigkeit von der Abgastemperatur bestimmt. Die Gaszusammensetzung während der Speicherphase (Magerphase) und während der Regenerationsphase (Fettphase) sind in der Tabelle 2 aufgelistet. Die Stickoxid-Speicherfähigkeit $S_{NO}$ wurde bestimmt als

$$S_{NO} = \frac{M_{NO,ein} - M_{NO,aus}}{M_{NO,ein}} \cdot 100\ [\%]. \qquad (5)$$

Hierin bedeutet $M_{NO,ein}$ die während der Speicherphasen über den Katalysator geleitete Masse von Stickstoffmonoxid und $M_{NO,aus}$ die während der Speicherphasen aus dem Katalysator austretende Masse von Stickstoffmonoxid. Die Stickoxid-Speicherfähigkeit wurde jeweils über 8 Mager/Fett-Zyklen gemittelt.

Tabelle 2:

| Gaszusammensetzung während Mager- und Fettphase | | |
|---|---|---|
| Gaskomponente | Magerphase | Fettphase |
| CO [Vol.-%] | 0 | 4 |
| $H_2$ [Vol.-%] | 0 | 1.3 |
| $O_2$ [Vol.-%] | 8 | 0 |
| $C_3H_8$ [Vol.-ppm] | 17 | |
| $C_3H_6$ [Vol.-ppm] | 33 | |
| NO [Vol.-ppm] | 500 | |
| $CO_2$ [Vol.-%] | 10 | |
| $H_2O$ [Vol.-%] | 10 | |
| $N_2$ | Rest | |
| RG [$h^{-1}$] | 30000 | |
| T [°C] | 250, 350, 450, 500 | |
| Lambda | 1,5 | 0,88 |
| Dauer [s] | 80 | 20 |
| RG: Raumgeschwindigkeit | | |

Neben dem frischen Zustand wurden die Katalysatoren nach zwei unterschiedlichen Alterungen bezüglich ihrer Stickoxid-Speicherfähigkeit überprüft:

a) Thermische Schädigung der katalytisch aktiven Komponente des Speicherkatalysators durch eine Ofenalterung an Luft bei einer Temperatur von 850° C für die Dauer von 24 Stunden.

b) Reversible Schwefelvergiftung des Speichermaterials an einem Magermotor bei einer Abgastemperatur von 350° C über die Dauer von 8 Stunden. Der Magermotor wurde mit einem Kraftstoff betrieben, der 189 Gew.-ppm Schwefel enthielt. Die Speicherphase dauerte jeweils 60 s bei einer Luftzahl von 1,4. Die Regenerationsphase dauerte jeweils 5 s bei einer Luftzahl von 0,75. Während der achtstündigen Verschwefelung des Katalysators speicherte er 3 g Schwefel in Form von Sulfaten ab.

Figur 2 zeigt die gemessenen Stickoxid-Speicherfähigkeiten des Katalysators in Abhängigkeit von der Temperatur des Synthesegases. Die thermische Schädigung des Stickoxid-Speichermaterials äußert sich in einer starken Abnahme der Stickoxid-Speicherfähigkeit bei Temperaturen unterhalb von 350° C. Bei höheren Temperaturen hat die Schädigung der katalytisch aktiven Komponenten keinen wesentlichen Einfluss auf die Stickoxid-Speicherfähigkeit. Dagegen bewirkt die Verschwefelung des Stickoxid-Speichermaterials eine Abnahme der Stickoxid-Speicherfähigkeit im gesamten Temperaturbereich zwischen 250 und 500°C.

Die Figuren 3 bis 5 zeigen eine Abgasreinigungsanlage (1) mit verschiedenen Sonden-Konfigurationen für die Durchführung des erfindungsgemäßen Verfahrens entsprechend der Aufstellung von Tabellel. (2) bezeichnet den Speicherkatalysator, dessen Funktion regelmäßig überprüft werden soll. Er ist in ein Gehäuse der Abgasreinigungsanlage eingebaut. In Figur 3 bezeichnet Sonde 1 eine Sonde, die eine physikalische Eigenschaft des Katalysators, wie zum Beispiel seine komplexe Impedanz, misst. Die Position der Sonde 1 in Figur 3 ist beispielhaft und kann in der Anwendung über den gesamten Katalysator oder an mehreren Stellen des Katalysators radial und axial angebracht sein. Figur 4 zeigt eine Anordnung mit einer Stickoxid-Sonde (Sonde 2) hinter dem Katalysator, während Figur 5 eine Anordnung mit zum Beispiel zwei Lambda-Sprungsonden zeigt, von denen eine vor dem Katalysator und eine hinter dem Katalysator angeordnet ist. Statt Lambda-Sprungsonden können in dieser Anordnung Lambda-Linearsonden, Wasserstoff-Sonden, Kohlenwasserstoff-Sonden und Kohlenmonoxid-Sonden eingesetzt werden. Mit Hilfe dieser Sonden werden die Zeitdifferenzen $\Delta t_1$ und $\Delta t_2$ gemessen. Hierbei dient die jeweils vor dem Katalysator angeordnete Sonde zur Bestimmung des Zeitpunktes des Umschaltens der Luftzahl des Abgases von mager nach fett, beziehungsweise von fett nach mager. Auf die Sonde vor dem Katalysator kann verzichtet werden, wenn der Umschaltzeitpunkt aus der Motorsteuerung entnommen wird.

Figur 6 zeigt den mit einer Lambda-Linearsonde gemessenen Verlauf der durch die Motorelektronik aufgeprägten Luftzahl vor dem Speicherkatalysator sowie die Sondenspannungen der Sprungsonde 3 vor dem Katalysator und der Sprungsonde 4 hinter dem Katalysator.

Die Luftzahl hat während der überwiegenden Dauer des Betriebs einen Wert über 1 (hier 1,4). In dieser mageren Betriebsphase werden Stickoxide durch die Stickoxid-Speicherfunktion des Katalysators und Sauerstoff durch die Sauerstoff-Speicherfunktion des Katalysators auf dem Katalysator gespeichert.

Nach einer gewissen Zeit ist der Stickoxidspeicher des Katalysators vollgelaufen und er muß regeneriert werden. Hierzu wird die Luftzahl von der Motorsteuerung auf einen Wert unter 1 (hier 0,75) abgesenkt. Demgemäß ändert sich das Signal von Sonde 3 vor dem Katalysator entsprechend. Durch das nun reduzierend wirkende Abgas werden die auf dem Speicherkatalysator gespeicherten Stickoxide zersetzt und desorbiert sowie der auf dem Katalysator gespeicherte Sauerstoff zur Oxidation der reduktiven Bestandteile des Abgases verbraucht. Erst nach Regeneration der Speichermaterialien kommt es zu einem Durchbruch des fetten Abgases durch den Katalysator und demgemäß zu einem entsprechenden Anstieg des Signals der Sonde 4.

Die beiden vorderen Flanken der Sondensignale zeigen eine Zeitversatz $\Delta t_1$, der durch die Stickoxid-Speicherfähigkeit und gegebenenfalls die Sauerstoff-Speicherfähigkeit des Katalysators verursacht wird. Je stärker die Speicherfunktionen geschädigt sind, je kürzer ist der Zeitversatz $\Delta t_1$.

Nach Abschluß der Regenerationsphase wird die Luftzahl wieder auf einen Wert über 1 angehoben, was dazu führt, dass das die Sondenspannung von Sonde 3 wieder auf Null zurückspringt. Die Sonde 4 zeigt jedoch noch für eine gewisse Zeit eine unterstöchiometrische Luftzahl hinter dem Katalysator an, da der Sauerstoff des mageren Abgases zunächst für die Auffüllung des Sauerstoffspeichers des Katalysators verwendet wird, bevor er ungehindert den Katalysator passieren kann und das Signal von Sonde 4 in seinen Ausgangszustand zurückkehrt. Hierdurch tritt ein Zeitversatz $\Delta t_2$ zwischen den beiden hinteren Flanken der Sondensignale auf.

Wie diese Überlegungen zeigen ist der Zeitversatz $\Delta t_2$ nur von der Sauerstoffspeicherfähigkeit des Katalysators abhängig. Durch Messen dieser Zeit kann also ein Urteil über den Zustand der Sauerstoff-Speicherfunktion des Katalysators gemacht werden. Je geringer $\Delta t_2$ ist, um so geringer ist die noch verbliebene Sauerstoffspeicherfähigkeit des Katalysators.

**Patentansprüche**

1. Verfahren zur Überprüfung der Funktionstüchtigkeit eines Stickoxid-Speicherkatalysators, welcher für die Entfernung der im Abgasstrom eines Magermotors enthaltenen Stickoxide eingesetzt wird und wenigstens ein Stickoxid-Speichermaterial, eine katalytisch aktive Komponente und gegebenenfalls ein Sauerstoff-Speichennaterial enthält, wobei der Magermotor mit zyklischem Wechsel des Luft/Kraftstoff-Gemisches von mager nach fett betrieben wird und die im Abgas enthaltenen Stickoxide bei magerem Abgas vom Stickoxid-Speichermaterial gespeichert (Speicherphase) und bei fettem Abgas desorbiert und umgesetzt werden (Regenerationsphase),
**dadurch gekennzeichnet,**
**dass** zur Ermittlung einer möglichen Schädigung der katalytisch aktiven Komponente die Stickoxid-Speicherfähigkeit des Stickoxid-Speicherkatalysators bei Abgastemperaturen bestimmt wird, die in einem Bereich liegen, in

dem die Oxidation von Stickstoffmonoxid zu Stickstoffdioxid kinetisch kontrolliert ist, während im thermodynamisch kontrollierten Bereich keine Änderung der Stickoxid-Speicherfähigkeit festzustellen ist, und dass zur Ermittlung einer möglichen Schädigung der Speichermaterialien die Stickoxid-Speicherfähigkeit des Stickoxid-Speicherkatalysators bei Abgastemperaturen bestimmt wird, die in einem Bereich liegen, in dem die Oxidation von Stickstoffmonoxid zu Stickstoffdioxid thermodynamisch kontrolliert ist.

**2.** Verfahren nach Anspruch 1,
**dadurch gekennzeichnet,**
**dass** die Stickoxid-Speicherfähigkeit während der Speicherphase mit Hilfe eines im Abgasstrom hinter dem Stickoxid-Speicherkatalysator angeordneten Stickoxid-Sensors bestimmt wird.

**3.** Verfahren nach Anspruch 1,
**dadurch gekennzeichnet,**
**dass** die Stickoxid-Speicherfähigkeit während der Regenerationsphase mit Hilfe einer linearen Lambda-Sonde, einer Sprung-Lambda-Sonde, einer Kohlenwasserstoff-Sonde, einer Kohlenmonoxid-Sonde oder einer Wasserstoff-Sonde ermittelt wird, indem der Zeitversatz $\Delta t_1$ zwischen dem Umschalten des Luft/Kraftstoff-Gemisches von mager nach fett und dem Durchbruch des fetten Abgases durch den Stickoxid-Speicherkatalysator gemessen wird.

**4.** Verfahren nach Anspruch 3,
**dadurch gekennzeichnet,**
**dass** zur Ermittlung einer möglichen Schädigung des Sauerstoff-Speichermaterials nach erneutem Umschalten des Luft/Kraftstoff-Gemisches von fett nach mager der sich ergebende Zeitversatz $\Delta t_2$ zwischen dem zweiten Umschalten und dem Durchbruch des Sauerstoffs durch den Katalysator gemessen wird.

**5.** Verfahren nach Anspruch 1,
**dadurch gekennzeichnet,**
**dass** die Stickoxid-Speicherfähigkeit an Hand der Änderung einer von der Menge der gespeicherten Stickoxide abhängigen physikalischen Eigenschaft des Speicherkatalysators bestimmt wird.

**6.** Verfahren nach Anspruch 4,
**dadurch gekennzeichnet,**
**dass** die Änderung der komplexen elektrischen Impedanz des Katalysators gemessen wird.

**7.** Verfahren nach einem der vorstehenden Ansprüche,
**dadurch gekennzeichnet,**
**dass** eine Schädigung der katalytisch aktiven Komponente vorliegt, wenn im kinetisch kontrollierten Bereich bei Temperaturen des Abgases unterhalb von 300° C eine Verminderung der Stickoxid-Speicherfähigkeit festgestellt wird, während im thermodynamisch kontrollierten Bereich oberhalb von 300°C, bevorzugt im Temperaturbereich von 350 - 450° C, keine Änderung der Stickoxid-Speicherfähigkeit feststellbar ist.

**8.** Verfahren nach einem der Ansprüche 1 bis 6,
**dadurch gekennzeichnet,**
**dass** die Ermittlung einer möglichen Schädigung der Speichermaterialien bei Temperaturen des Abgases oberhalb von 300° C bevorzugt im Temperaturbereich von 350 - 450° C vorgenommen wird.

**9.** Verfahren nach Anspruch 8,
**dadurch gekennzeichnet,**
**dass** nach Erkennen einer Schädigung des Stickoxid-Speichermaterials eine Desulfatierung des Stickoxid-Speicherkatalysators eingeleitet wird.

## Claims

**1.** A process for checking the functioning efficiency of a nitrogen oxide storage catalyst which is used to remove the nitrogen oxides contained in the exhaust gas stream from a lean-mix engine and which contains at least a nitrogen oxide storage material, a catalytically active component and optionally an oxygen storage material, wherein the lean-mix engine is operated with cyclic alternation of the air/fuel mixture from lean-mix to rich-mix and the nitrogen oxides contained in the exhaust gas are stored by the nitrogen oxide storage material in the presence of lean-mix

exhaust gas (storage phase) and is desorbed and converted in the presence of rich-mix exhaust gas (regeneration phase),
**characterised in that**,
in order to determine possible damage to the catalytically active component, the nitrogen oxide storage capacity of the nitrogen oxide storage catalyst is determined at exhaust gas temperatures which are within the range in which the oxidation of nitrogen monoxide to nitrogen dioxide is kinetically controlled, while no change in the nitrogen oxide storage capacity is detected in the thermodynamically controlled range and, to determine possible damage to the storage materials, the nitrogen oxide storage capacity of the nitrogen oxide storage catalyst is determined at exhaust gas temperatures which are within the range in which the oxidation of nitrogen monoxide to nitrogen dioxide is thermodynamically controlled.

**2.** A process according to claim 1,
**characterised in that**,
the nitrogen oxide storage capacity is determined during the storage phase with the aid of a nitrogen oxide sensor located in the exhaust gas stream downstream of the nitrogen oxide storage catalyst.

**3.** A process according to claim 1,
**characterised in that**,
the nitrogen oxide storage capacity is measured during the regeneration phase with the aid of a linear lambda sensor, a jump lambda sensor, a hydrocarbon sensor, a carbon monoxide sensor or a hydrogen sensor by measuring the time interval $\Delta t_1$ between switching over the air/fuel mixture from lean-mix to rich-mix and breakthrough of the rich-mix exhaust gas through the nitrogen oxide storage catalyst.

**4.** A process according to claim 3,
**characterised in that**,
to determine possible damage to the oxygen storage material, after again switching over the air/fuel mixture from rich-mix to lean-mix, the time interval $\Delta t_2$ between the second switch over and breakthrough of oxygen through the catalyst is measured.

**5.** A process according to claim 1,
**characterised in that**,
the nitrogen oxide storage capacity is determined via the change in a physical property of the storage catalyst which depends on the amount of stored nitrogen oxides.

**6.** A process according to claim 4,
**characterised in that**,
the change in the complex electrical impedance of the catalyst is measured.

**7.** A process according to one of the preceding claims,
**characterised in that**,
damage to the catalytically active component is present when a reduction in nitrogen oxide storage capacity is detected in the kinetically controlled region at temperatures of the exhaust gas below 300°C, while in the thermodynamically controlled region above 300°C, preferably in the temperature range 350 - 450°C, no change in nitrogen oxide storage capacity can be detected.

**8.** A process according to one of claims 1 to 6,
**characterised in that**,
determination of possible damage to the storage materials is performed at temperatures of the exhaust gas above 300°C, preferably in the temperature range 350 - 450°C.

**9.** A process according to claim 8,
**characterised in that**,
after finding damage to the nitrogen oxide storage material, desulfatisation of the nitrogen oxide storage catalyst is initiated.

## Revendications

1. Procédé pour la vérification du bon fonctionnement d'un catalyseur d'accumulation d'oxyde d'azote utilisé pour retirer les oxydes d'azote contenus dans les gaz d'échappement d'un moteur à mélange pauvre et qui contient au moins une matière d'accumulation de l'oxyde d'azote, un composant catalytiquement actif et, le cas échéant, une matière d'accumulation de l'oxygène, le moteur à mélange pauvre fonctionnant avec une alternance cyclique du mélange air/carburant de pauvre à riche et les oxydes d'azote contenus dans les gaz d'échappement étant accumulés (phase d'accumulation) par la matière d'accumulation d'oxyde d'azote en cas de gaz d'échappement pauvres, et désorbés et convertis (phase de régénération) en cas de gaz d'échappement riches,
**caractérisé en ce que**
pour déterminer, une détérioration possible du composant catalytiquement actif, on détermine la capacité d'accumulation de l'oxyde d'azote du catalyseur d'accumulation d'oxyde d'azote à des températures des gaz d'échappement qui se situent dans un domaine dans lequel l'oxydation du monoxyde d'azote en dioxyde d'azote est cinétiquement contrôlée, alors que dans le domaine thermodynamiquement contrôlé on ne constate aucune modification de la capacité d'accumulation de l'oxyde d'azote, et pour déterminer une possible détérioration des matières d'accumulation, on détermine la capacité d'accumulation de l'oxyde d'azote du catalyseur d'accumulation d'oxyde d'azote à des températures des gaz d'échappement qui se situent dans un domaine dans lequel l'oxydation du monoxyde d'azote en dioxyde d'azote est thermodynamiquement contrôlée.

2. Procédé selon la revendication 1,
**caractérisé en ce qu'**
on détermine la capacité d'accumulation de l'oxyde d'azote pendant la phase d'accumulation à l'aide d'un capteur d'oxyde d'azote disposé dans le flux de gaz d'échappement après le catalyseur d'accumulation d'oxyde d'azote.

3. Procédé selon la revendication 1,
**caractérisé en ce qu'**
on détermine la capacité d'accumulation de l'oxyde d'azote pendant la phase de régénération à l'aide d'une sonde lambda linéaire, une sonde lambda étagée, une sonde à hydrocarbure, une sonde à monoxyde de carbone ou une sonde à hydrogène en mesurant le décalage dans le temps $\Delta t_1$ entre le basculement du mélange air/carburant de pauvre à riche et la traversée des gaz d'échappement riches à travers le catalyseur d'accumulation d'oxyde d'azote.

4. Procédé selon la revendication 3,
**caractérisé en ce que**
pour déterminer une possible détérioration de la matière d'accumulation de l'oxygène après un nouveau basculement du mélange air/carburant de riche à pauvre, on mesure le décalage dans le temps $\Delta t_2$ qui apparaît entre le deuxième basculement et la traversée de l'oxygène à travers le catalyseur.

5. Procédé selon la revendication 1,
**caractérisé en ce qu'**
on détermine la capacité d'accumulation de l'oxyde d'azote à l'aide de la modification d'une propriété physique du catalyseur d'accumulation dépendant de la quantité d'oxydes d'azote accumulée.

6. Procédé selon la revendication 4,
**caractérisé en ce qu'**
on mesure la modification de l'impédance électrique complexe du catalyseur.

7. Procédé selon l'une quelconque des revendications précédentes,
**caractérisé en ce qu'**
il y a une détérioration du composant catalytiquement actif si, dans le domaine cinétiquement contrôlé à des températures des gaz d'échappement inférieures à 300°C, on constate une diminution de la capacité d'accumulation de l'oxyde d'azote alors que dans le domaine thermodynamiquement contrôlé au-delà de 300°C, de préférence dans le domaine de température de 350 à 450°C, on ne constate aucune modification de la capacité d'accumulation de l'oxyde d'azote.

8. Procédé selon l'une quelconque des revendications 1 à 6,
**caractérisé en ce qu'**
on procède à la détermination d'une possible détérioration des matières d'accumulation à des températures des

gaz d'échappement au-delà de 300°C, de préférence dans le domaine de température de 350 à 450°C.

**9.** Procédé selon la revendication 8,
**caractérisé en ce qu'**
après la détection d'une détérioration de la matière d'accumulation de l'oxyde d'azote, on initie une désulfatation du catalyseur d'accumulation d'oxyde d'azote.

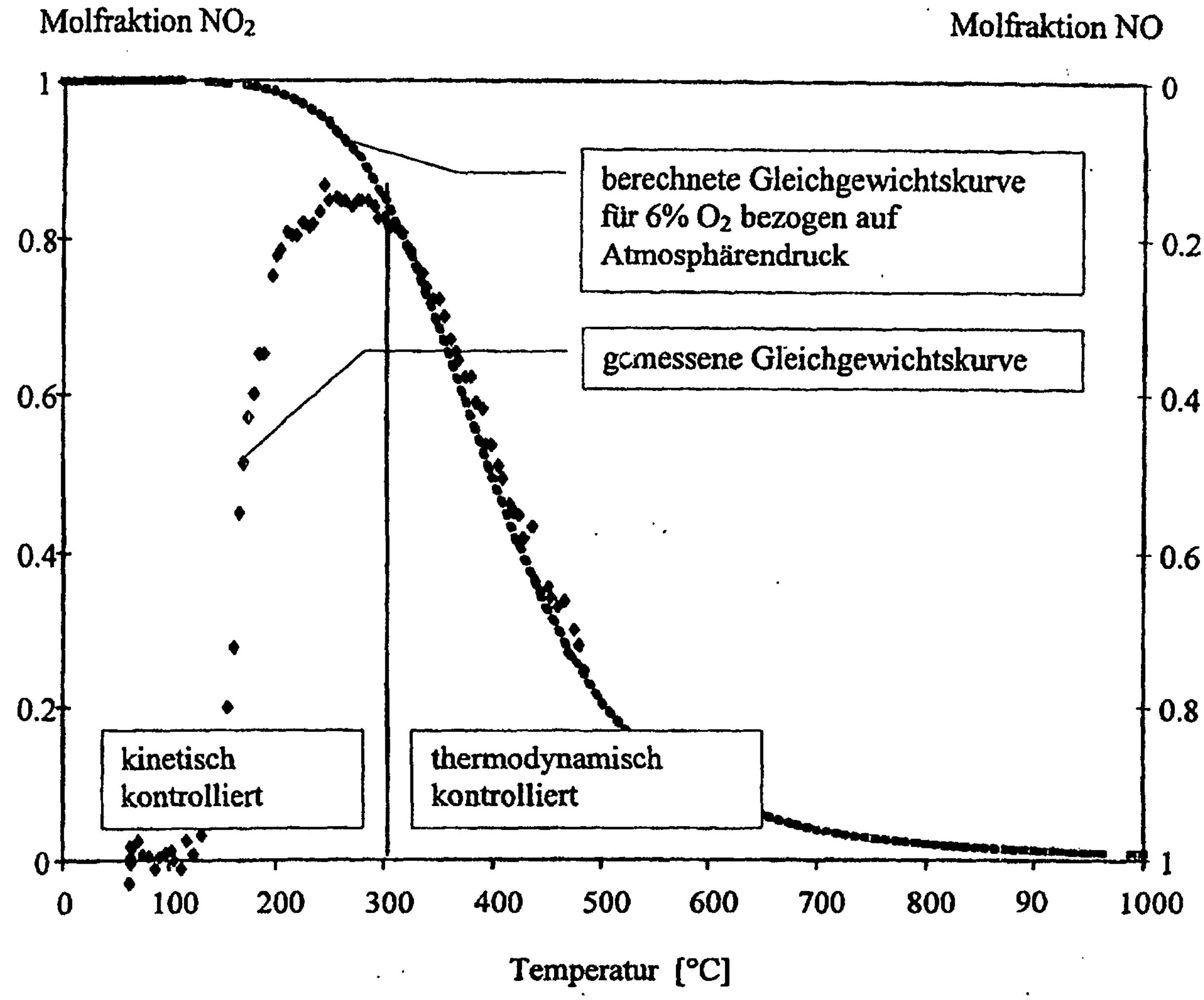
Molfraktion $NO_2$
Molfraktion NO
1
0.8
0.6
0.4
0.2
0
0
0.2
0.4
0.6
0.8
1
berechnete Gleichgewichtskurve für 6% $O_2$ bezogen auf Atmosphärendruck
gcmessene Gleichgewichtskurve
kinetisch kontrolliert
thermodynamisch kontrolliert
0
100
200
300
400
500
600
700
800
90
1000
Temperatur [°C]

**Figur 1**

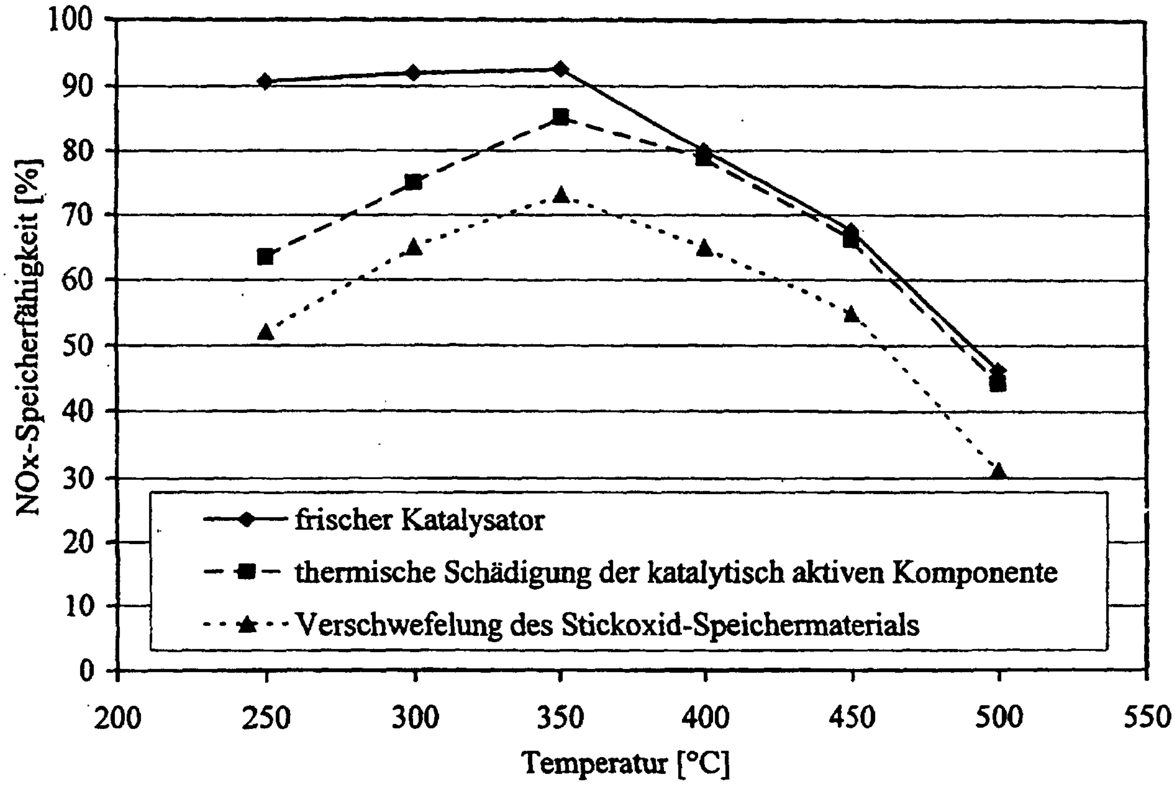


**Figur 2**

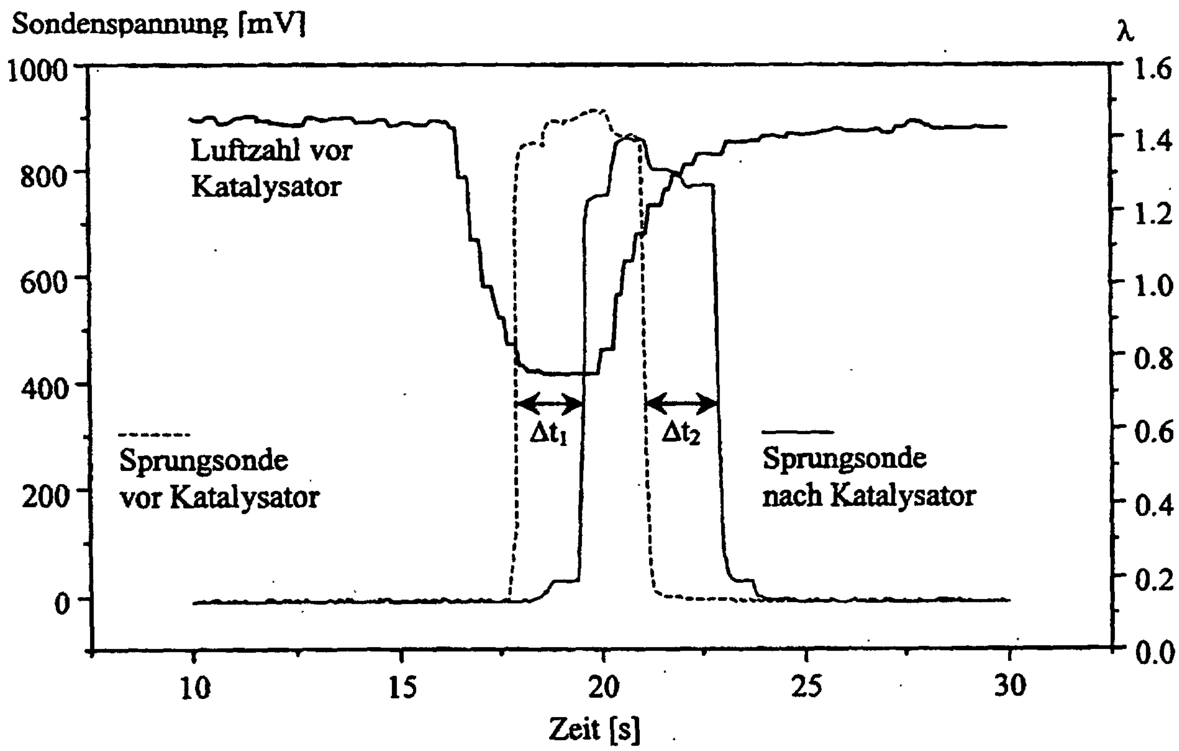


**Figur 6**

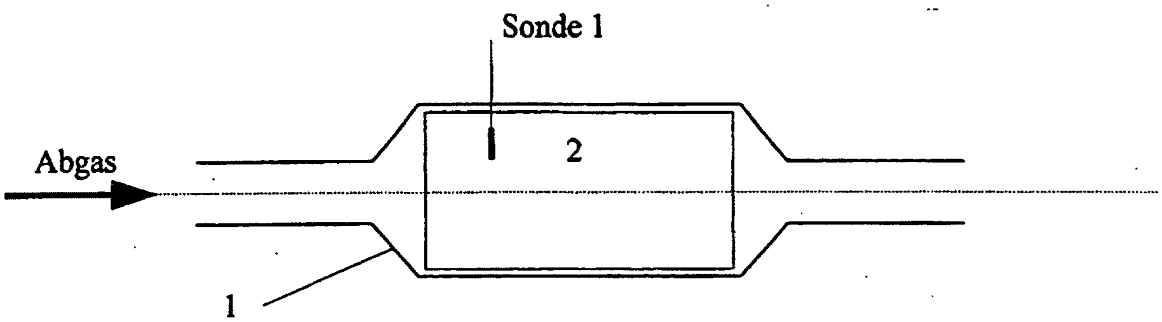


Figur 3

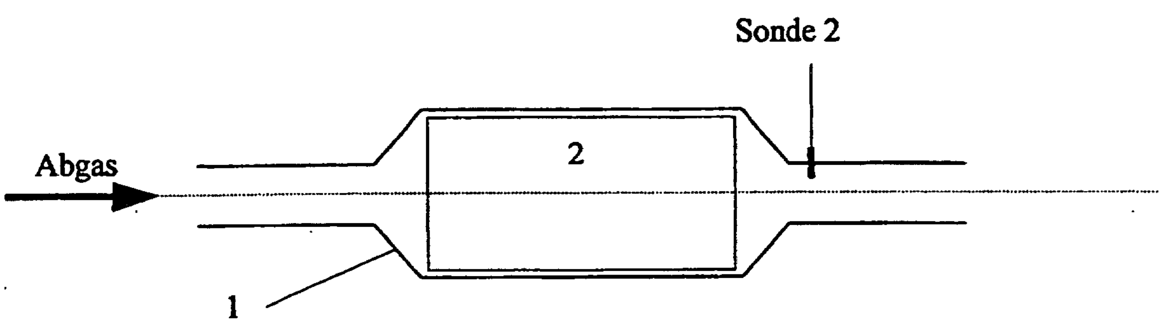


Figur 4

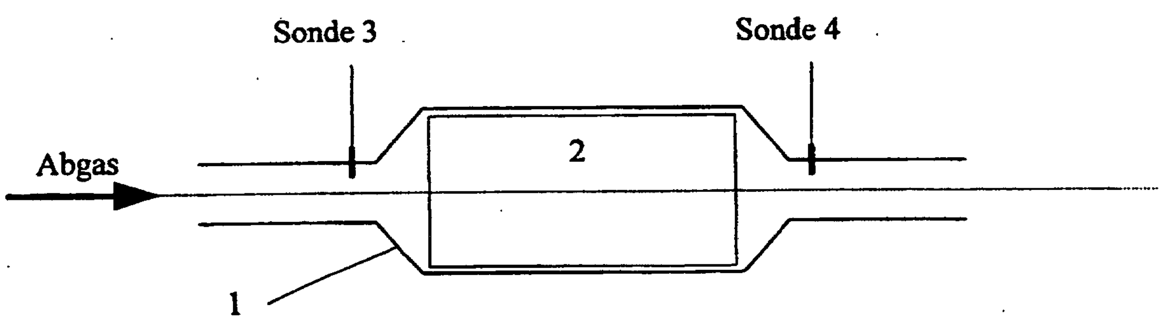


Figur 5